# FASCICULE DE BREVET EUROPEEN

(11) **EP 2 521 904 B1**
(45) Date de publication et mention de la délivrance du brevet: **20.03.2019**
(21) Numéro de dépôt: 10812869.5
(22) Date de dépôt: 20.12.2010
(51) Int. Cl.: G01H 1/12, H04R 1/46, B25B 5/06, B25B 5/16

(54) **PINCE D'ECOUTE POUR UN OUTIL D'AIDE AU DIAGNOSTIC VIBRO-ACOUSTIQUE UTILISE NOTAMMENT DANS LE DOMAINE AUTOMOBILE**
ABHORCHKLEMME FÜR EIN VIBROAKUSTISCHES DIAGNOSEINSTRUMENT FÜR DEN VORWIEGENDEN GEBRAUCH IN DER AUTOMOBILBRANCHE
LISTENING CLAMP FOR A VIBROACOUSTIC DIAGNOSIS TOOL USED MAINLY IN THE AUTOMOTIVE INDUSTRY

(30) Priorité: 18.01.2010 FR 1050291; 04.01.2010 FR 1050016
(43) Date de publication de la demande: 14.11.2012
(73) Titulaire: PSA Automobiles SA, 78300 Poissy (FR)
(72) Inventeur: RAGUENET, Wilfrid, 78700 Conflans Sainte Honorine (FR); AUTIN, Gregory, F-95800 Cergy (FR); AUBOIS, Valérie, F-93700 Drancy (FR); PERONNET, Cyril, F-78510 Triel Sur Seine (FR)
(74) Mandataire: Bourguignon, Eric Pascal Jean
(86) Numéro de dépôt international: PCT/FR2010/052830
(87) Numéro de publication internationale: WO 2011/080466

(56) Documents cités:
- EP-A2- 0 570 229
- WO-A1-2005/118224
- DE-A1- 2 703 781
- DE-A1- 3 439 004
- FR-A1- 2 320 536
- FR-A1- 2 334 958
- FR-A1- 2 388 259
- GB-A- 2 172 469
- US-A- 4 813 107
- US-A- 4 827 771
- US-A- 5 435 185
- US-A1- 2004 129 080
- US-A1- 2005 098 932
- US-A1- 2009 024 268
- US-B1- 6 708 587

## Description

La présente invention concerne un outil d'aide au diagnostic vibro-acoustique utilisant une pince d'écoute, connu par exemple du document EP0570229A2. Une pince adaptée à cet outil est connue par exemple du document US2005098932A1. Ces objets sont notamment utilisés lors d'une opération de maintenance ou d'assistance après-vente d'un véhicule automobile.

Un outil de diagnostic vibro-acoustique comporte, de manière connue en soi, un casque adapté aux environnements bruyants, un microphone, quatre pinces pour la détection de bruits de nature solide et un sélecteur permettant d'identifier immédiatement la pince la plus proche du phénomène vibro-acoustique à détecter.

Un type de pince d'écoute connue comprend deux branches articulées l'une à l'autre, chacune comprenant une mâchoire et un manche disposés de part et d'autre de l'articulation. Une telle pince comprend un ressort de rappel définissant une position de repos fermée des mâchoires. Les mâchoires sont des corps rigides métalliques venant directement agripper l'élément sur lequel la mesure doit être effectuée, telles les mâchoires usuelles de pinces de rechargement de batterie. Le capteur est formé d'un accéléromètre à un axe collé dans une mâchoire à distance de la zone de contact. Avec une telle pince, seules les vibrations produites selon la direction perpendiculaire au positionnement de l'accéléromètre dans la pince sont transformées en signal électrique et peuvent être écoutées par l'opérateur. De plus, des variations de sonorité et de niveau importantes sont induites par le positionnement de la pince sur la structure à analyser. La qualité d'écoute est ainsi médiocre et rend un diagnostic relativement difficile. Par ailleurs, une telle pince risque d'occasionner des courts-circuits qui peuvent s'avérer particulièrement gênants, en particulier lorsque les pinces sont appliquées sur des véhicules à motorisation hybride. En outre, les différents types d'applications d'une telle pince dans un véhicule, notamment dans un groupe motopropulseur ou sur les liaisons au sol, nécessitent l'utilisation de plusieurs jeux de pinces d'écoute de dimensions différentes (en général les pinces d'écoute d'un même outil sont de trois tailles différentes), et sur un même élément de la structure, l'écoute est différente selon la pince choisie, ce qui a pour conséquence de créer des difficultés et/ou des erreurs d'interprétation.

Le but de la présente invention est de fournir une pince d'écoute pour un outil d'aide au diagnostic vibro-acoustique, notamment une pince d'écoute qui facilite et améliore, d'une part, le diagnostic vibro-acoustique effectué lors d'une opération de maintenance ou d'assistance après-vente automobile et, d'autre part, le travail des experts qui peuvent ainsi bénéficier conjointement d'un outil de recherche rapide, d'analyse et de « reporting » par l'intermédiaire des sons et vidéos enregistrés.

Un autre but de la présente invention est de fournir une telle pince d'écoute, qui présente une bonne réponse en fréquence, notamment entre 0 et 4000 Hz, qui présente une bonne ouverture d'accrochage et un encombrement réduit, et qui évite tout risque de court-circuit électrique et qui soit économique.

Enfin, c'est également un but de la présente invention de fournir un outil d'aide au diagnostic vibro-acoustique, qui permette une écoute simultanée de plusieurs pinces instrumentées.

Pour parvenir à ces buts, la présente invention a pour objet un outil d'aide au diagnostic vibro-acoustique d'une structure à analyser, notamment d'aide au diagnostic lors d'une opération de maintenance ou d'assistance après-vente automobile, comprenant :
- un casque adapté aux environnements bruyants,
- un microphone destiné à mesurer les bruits aériens,
- une pluralité de pinces d'écoute destinées à mesurer les bruits solidiens de la structure à analyser,
- un boîtier de sélection connecté au casque, au microphone et à la pluralité de pinces d'écoute, permettant à un opérateur d'identifier immédiatement la pince d'écoute la plus proche du phénomène vibro-acoustique à étudier,
lesdites pinces comprenant :
- un corps qui est formé de deux branches articulées autour d'un axes d'articulation, chaque branche comportant, à une extrémité, une mâchoire, et, à l'autre extrémité, un manche, et
- un accéléromètre connecté au boitier de sélection,
Dans cette nouvelle pince selon l'invention, chaque pince d'écoute comprend de plus un patin monté sur chaque mâchoire, chaque patin étant monté pivotant par rapport à sa mâchoire, de telle sorte que le patin assure un contact efficace entre la pince et la structure à analyser, et découple le corps de la pince de la partie d'écoute, et le patin comprend :
- une bille formant un organe collecteur de bruits solidiens provenant de la structure à analyser, et
- une platine qui est montée pivotante par rapport à la mâchoire correspondante et qui est adaptée à transmettre l'information vibratoire collectée par la bille jusqu'à l'accéléromètre (36), et
- ladite bille étant en contact avec et en saillie par rapport à la platine (32, 42).

Selon un mode de réalisation particulier, la pince d'écoute comporte un ressort sensiblement coaxial à l'axe d'articulation des deux branches pour presser les deux mâchoires l'une contre l'autre en l'absence d'un effort d'ouverture de la pince sur les manches, le ressort étant de raideur relativement élevée pour limiter les effets non linéaires.

Selon un autre mode de réalisation, la matière plastique du corps de la pince est d'une dureté de l'ordre de 80 Shore D et celle du patin est d'une dureté de l'ordre de 40 Shore D.

Selon un autre mode de réalisation la longueur de la pince est comprise entre 8,5 cm et 9 cm, la distance entre les deux patins étant de l'ordre de 3,5 cm lorsque la pince est ouverte.

Selon un mode de réalisation particulier, l'outil d'aide au diagnostic vibro-acoustique comprend quatre pinces d'écoute conformes à la présente invention.

D'autres buts, avantages et caractéristiques de l'invention apparaîtront dans la description qui suit de trois modes de réalisation préférés, non limitatifs et accompagnés de dessins dans lesquels :
- La figure 1 représente les composants d'un outil d'aide au diagnostic vibro-acoustique ;
- La figure 2 représente, de manière schématique, une pince d'écoute pour un outil d'aide au diagnostic vibro-acoustique, selon un premier mode de réalisation de la présente invention ;
- La figure 3 est une vue en perspective, schématique, représentant un patin de la pince d'écoute de la figure 2 ;
- La figure 4 est un graphe représentatif de la caractéristique d'élasticité du ressort de la pince d'écoute de la figure 2 ;
- La figure 5 est une vue en perspective de la pince d'écoute de la figure 2 au niveau de la liaison des patins ;
- La figure 6 représente quatre pinces d'écoute testées de type et de forme différentes ;
- La figure 7 est un graphe représentatif de la réponse vibratoire en fonction de la fréquence, dans le cas où le capteur de vibrations est placé dans les mâchoires de la pince d'écoute ;
- La figure 8 est également un graphe représentatif de la réponse vibratoire en fonction de la fréquence, dans le cas où le capteur de vibrations est placé sur le patin à rotule de la pince d'écoute ;
- La figure 9 est similaire à la figure 2 et représente une pince d'écoute selon un second mode de réalisation de la présente invention ;
- La figure 10 est une vue en coupe d'un patin de la pince d'écoute de la figure 9 ;
- La figure 11 est une vue en perspective schématique de la structure d'un patin d'une pince d'écoute selon un troisième mode de réalisation ; et
- La figure 12 est une vue en coupe transversale du patin de la figure 11.

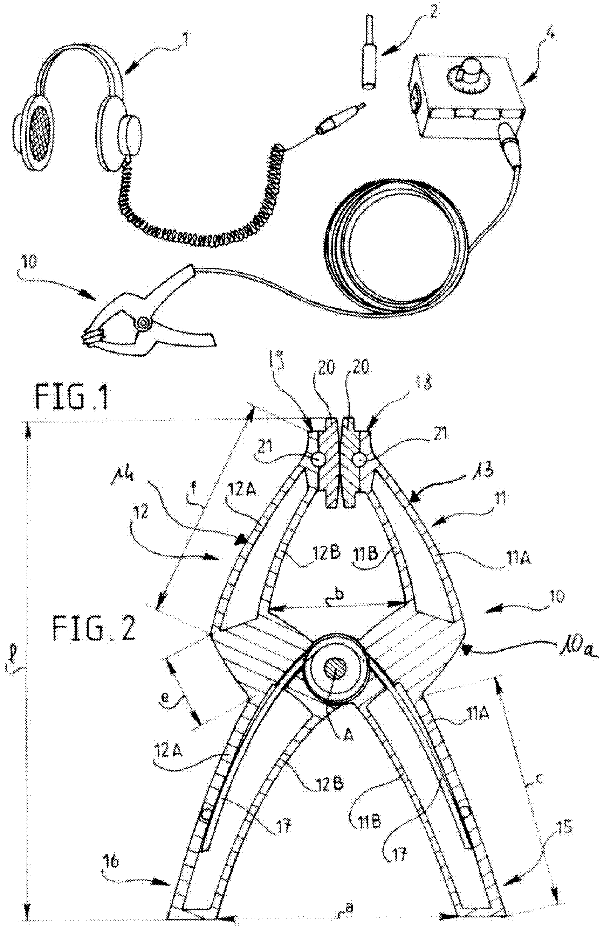

La figure 1 représente un outil d'aide au diagnostic vibro-acoustique adapté aux diagnostics effectués lors d'opérations de maintenance et d'assistance après-vente effectuées par des équipes mobiles dites « équipes mobiles de l'assistance après-vente » sur des véhicules automobiles. Un tel outil permet de réaliser une analyse vibratoire consistant en une analyse de différentes sources de bruit pour identifier les dysfonctionnements d'un véhicule (un certain nombre de pannes ou de dysfonctionnements induisent des symptômes acoustiques et vibratoires).

L'outil d'aide au diagnostic conforme à la présente invention comprend un casque 1 adapté aux environnements bruyants, un microphone 2 destiné à mesurer les bruits aériens (les bruits émis par une source n'ayant pas de contact avec la structure analysée), une pluralité de pinces d'écoute 10 (ici, quatre pinces d'écoute 10) destinées à mesurer les bruits solidiens (les bruits émis par une mise en vibration directe de la structure analysée), et un boîtier de sélection 4 permettant à un opérateur d'identifier immédiatement la pince d'écoute 10 la plus proche du phénomène vibro-acoustique à étudier. Le casque 1, le microphone 2 et les pinces d'écoute 10 sont munis de connecteurs permettant leur connexion au boîtier de sélection 4. Le boîtier de sélection 4, sur la base des signaux électriques fournis par le microphone 2 et les pinces d'écoute 10, effectue des traitements de signal pour générer un signal audible pour chacun des bruits mesurés. Le boîtier de sélection 4 comprend un commutateur permettant à l'opérateur de sélectionner la pince d'écoute 10 dont le signal audible sera restitué dans le casque 1. De préférence, toutes les pinces d'écoute 10 sont de même taille.

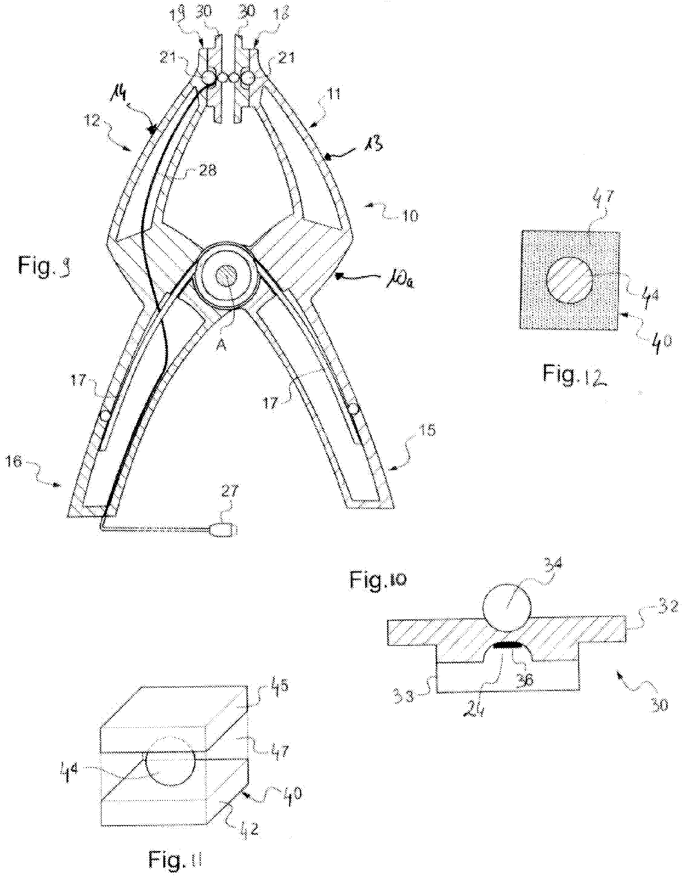

L'objet de la présente invention comprend également une pince d'écoute 10 d'un outil d'aide au diagnostic. Cette pince d'écoute 10 rend possible un diagnostic vibro-acoustique par écoute simultanée de plusieurs pinces. En référence aux figures 2 et 9, la pince d'écoute 10 de la présente invention comprend un corps 10a qui est formé par deux branches 11, 12 articulées autour d'un axe d'articulation A qui, ici, est disposé au niveau de la partie médiane des branches 11, 12. Outre le corps 10a, la pince d'écoute 10 comprend deux patins 20, 30 (ici, identiques). Chaque branche 11, 12 comporte, à une extrémité une mâchoire 13, 14, et à l'autre extrémité un manche 15, 16. Les extrémités distales 18, 19 des mâchoires 13, 14 sont disposées en vis-à-vis et comportent, chacune, un patin 20.

Le corps 10a de la pince d'écoute 10 est réalisé en matière plastique rigide de telle sorte que l'utilisation de la pince d'écoute 10 ne peut pas occasionner de court-circuit électrique. La matière plastique choisie pourra par exemple être, par exemple un élastomère rigide de type ABS (terpolymère Acrylonitrile-Butadiène-Styrène) d'une dureté de l'ordre de 80 Shore D.

Les patins 20 sont avantageusement réalisés en matière plastique dure, par exemple d'une dureté de l'ordre de 40 Shore D.

La pince d'écoute 10 de l'invention est plus légère que les pinces connues de l'art antérieur, et cela grâce au fait que les deux branches 11, 12 sont formées de nervures 11A, 11B ; 12A, 12B, ajourées de façon à les rendre plus légères, sauf dans leur partie médiane à la hauteur de l'axe d'articulation A où elles sont au contraire renforcées.

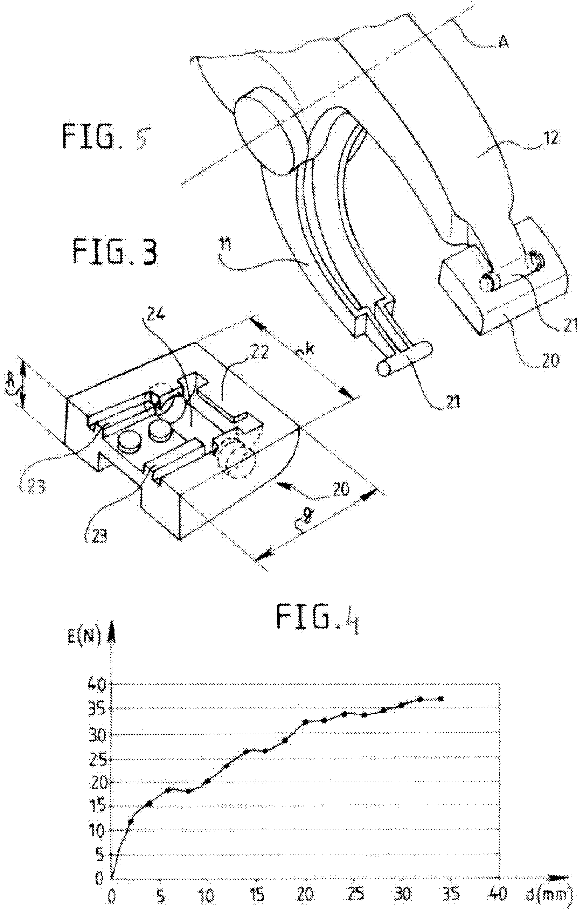

En référence aux figures 2 et 3, la pince d'écoute 10 peut avoir les dimensions suivantes :
Distance (a) entre les branches 11, 12 au niveau de l'extrémité libre des manches 15, 16 : 4,5 cm ;
Distance (b) entre les branches 11, 12 à la base de leurs parties supérieures : 2,5 cm ;
Longueur (c) des manches 15, 16 : 4 cm ;
Longueur (e) de la partie médiane renforcée des branches 11, 12 : 1,5 cm ;
Longueur (f) des mâchoires 13, 14 : 3,5 cm ;
Largeur (g) des patins 20 : 1 cm ;
Épaisseur (h) des patins 20 : 0,4 cm ;
Longueur (k) des patins 20 : 1,5 cm.

La pince d'écoute 10 présentera avantageusement une longueur comprise entre 80 et 100 mm ; de préférence, sa longueur totale (I) est comprise entre 8,5 cm et 9 cm, et la distance entre les deux patins 20 de la pince d'écoute 10, lorsqu'elle est ouverte, est de l'ordre de 3,5 cm. La pince d'écoute 10 présente donc une large ouverture d'accrochage et un faible encombrement.

La pince d'écoute 10 selon l'invention, malgré sa petite taille, possède un entraxe supérieur à la grosse pince qui équipe les outils actuels de diagnostic connus de l'art antérieur. Par ailleurs, on notera que la taille de la pince de l'invention est très inférieure à la taille de la pince moyenne utilisée dans les outils de diagnostic connus actuellement. Cette taille et cet entraxe de la pince selon l'invention permettent d'équiper l'écouteur automobile avec quatre pinces de même taille, ce qui permet des écoutes simultanées en différents points sans risquer une dégradation de l'écoute par une réponse structurelle de la pince différente.

Chaque patin 20 est monté sur la mâchoire 13, 14 correspondante par l'intermédiaire d'une articulation à rotule de telle sorte que les patins 20 assurent un contact efficace entre le corps 10a de la pince la pince d'écoute 10 et la structure à analyser et une collecte des vibrations. Les patins 20 sont ainsi montés pivotants par rapport aux mâchoires 13, 14 par l'intermédiaire d'arbres 21, leur course de pivotement pouvant par exemple être de l'ordre de 30° pour permettre une fixation et une écoute optimales. L'articulation à rotule permet un découplage des patins 20 du corps 10a et assure un point de contact variable avec la structure en test. Bien que les patins soient montés pivotants autour d'un axe par rapport aux mâchoires 13 et 14 dans les exemples illustrés, on peut également envisager de monter les patins avec deux degrés de liberté en pivotement par rapport aux mâchoires.

La pince d'écoute 10 comporte un ressort 17 (avantageusement, un ressort de torsion sensiblement coaxial à l'axe d'articulation A) pour presser les deux mâchoires 13 et 14 l'une contre l'autre en l'absence d'un effort d'ouverture sur les manches 15 et 16. Ce ressort 17 est de raideur relativement élevée pour limiter les effets non linéaires. Le graphe de la figure 4 est un relevé des efforts « E » sur le ressort 17 (exprimés en Newton) en fonction des déplacements « d », (exprimés en millimètres), permettant de caractériser le ressort 17. Ainsi, la pince d'écoute 10 offre un effort de serrage plus important que celles de l'art antérieur.

La figure 5 illustre plus précisément la géométrie des extrémités distales 18, 19 des mâchoires 13, 14, au niveau des arbres 21. Comme illustré à la figure 3, le patin 20 du premier mode de réalisation de la présente invention comporte un évidement cylindrique 24 destiné à recevoir l'arbre 21 pour constituer l'articulation du patin 20 sur le corps 10a de la pince d'écoute 10. L'arbre 21 est inséré dans le patin 20 par des guides 23, vient se fixer sur le corps 10a par encliquetage, et est retenu en position grâce à une languette 22 en saillie au dessus de l'évidement cylindrique 24.

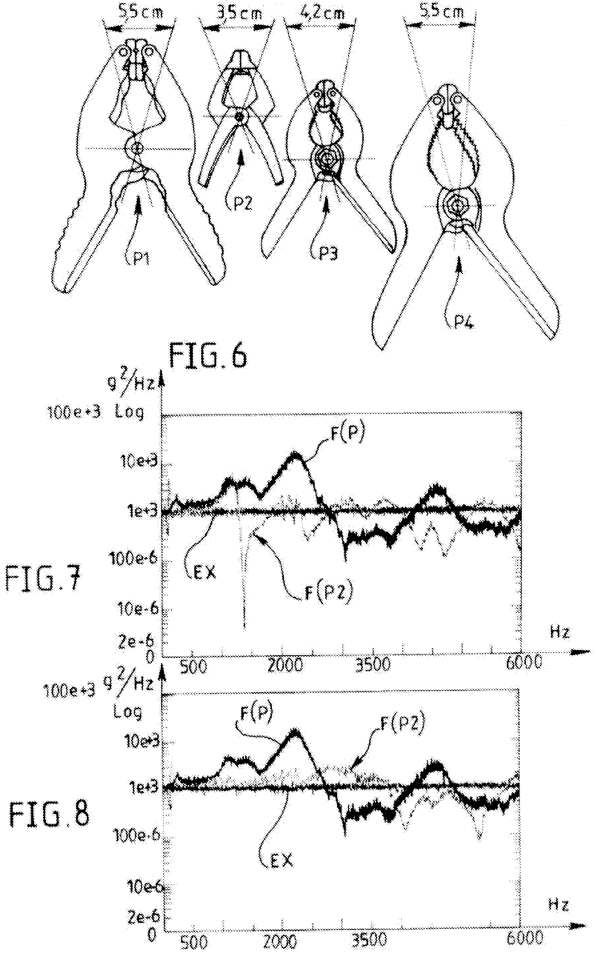

Des essais vibratoires ont été réalisés par la Demanderesse sur les quatre types de pince d'écoute P1, P2, P3 et P4 représentés sur le dessin de la figure 6. Ces quatre pinces, toutes fabriquées en matière plastique pour ne pas entraîner de courts-circuits électriques et de risques pour les utilisateurs, présentent des patins en matière plastique dure, montés par l'intermédiaire d'articulations à rotule conformément à l'exemple décrit ci-dessus, permettant, par conséquent, d'avoir, d'une part, un contact efficace entre la pince et la pièce ou l'ensemble en test et, d'autre part, de découpler le corps de la pince de la partie capteur d'écoute. Ces quatre types de pince présentent des dimensions différentes. Ces essais vibratoires ont permis de conclure que la pince qui convient le mieux à l'application de diagnostic vibro-acoustique en maintenance ou assistance après-vente automobile est la pince désignée P2.

Les figures 7 et 8 sont des graphes représentatifs de la réponse vibratoire (densité spectrale de puissance ou PSD), exprimée classiquement en g²/Hz, en fonction de la fréquence en hertz (Hz). Les essais de la figure 7 ont été réalisés avec un capteur (un accéléromètre) placé dans les mâchoires, et ceux de la figure 8 avec le capteur (l'accéléromètre) dans les patins à rotule. Sur ces figures, les courbes EX correspondent à l'excitation et sont ainsi sensiblement « plates », les courbes F(P2) représentent la réponse de la pince P2, et les courbes F(P) représentent la réponse de la pince moyenne (pince P1 de la figure 6).

Il importe de noter que lorsque l'accéléromètre est placé sur le patin (figure 8), les surtensions sont extrêmement amorties et la réponse est sensiblement « plate » jusqu'à une fréquence de l'ordre de 3800 Hz. La pince d'écoute 10 selon l'invention permet, ainsi, de répondre à l'exigence d'une réponse vibratoire sensiblement « plate » dans la plage de fréquences de 0 à 4000 Hz.

La figure 9 illustre une pince d'écoute 10 conforme à un second mode de réalisation dont l'un des patins 30 inclut un accéléromètre (non illustré à cette figure) qui est raccordé par l'intermédiaire d'un câble électrique 28 à un connecteur 27 destiné à être raccordé au boîtier de sélection 4. Le câble électrique 28 pourra présenter une séparation au niveau de l'extrémité de l'un manche 16 sous forme de connecteur de libre mouvement. La pince d'écoute 10 pourra ainsi être aisément fixée sur la structure à écouter sans être gêné par le câble 28. Le câble 28 peut traverser le corps 10a et y être fixé par l'intermédiaire d'une colle joint.

La pince pourrait présenter également un accéléromètre fixé à une mâchoire, le patin correspondant présentant une bille sphérique en saillie par rapport à une platine, la bille servant de collecteur de vibrations d'un élément serré entre les mâchoires de la pince.

Comme cela est plus précisément illustré à la figure 10, les patins 30 comportent une plaque sensiblement plane 32 orientée vers l'espace de serrage et une partie de fixation 33 dans laquelle l'évidement cylindrique 24 de l'arbre 21 est ménagé. Le patin 30 illustré comporte un accéléromètre 36 placé dans le fond de l'évidement 34. En fonction de la précision d'écoute souhaitée, un accéléromètre 36 à un ou plusieurs axes est utilisé.

La plaque 32 du patin 30 comprend par ailleurs un alésage en forme de portion de sphère dans lequel une bille sphérique 34 est logée. La bille sphérique 34 forme un organe collecteur de bruits solidiens. La bille 34 présente en pratique une partie en saillie par rapport à la plaque 32 et à l'air libre afin de pouvoir venir en contact avec un élément à écouter. Du fait de sa forme sphérique, la bille 34 en contact avec la structure à écouter permet de recueillir une information vibratoire indépendante de l'orientation du patin 30 par rapport à cet élément. La partie plane 32 et la partie de fixation 33 servent à transmettre l'information vibratoire collectée par la bille 34 jusqu'à l'accéléromètre 36. En pratique, la qualité de l'écoute obtenue avec un tel patin 30 est sensiblement améliorée : d'une part les fonctions de collecte de vibrations et de transmission de vibrations à l'accéléromètre sont dissociées, et d'autre part les vibrations sont transmises de l'élément à la bille 34 qui constitue un collecteur dont les propriétés sont parfaitement identifiées et maîtrisées. En effet, dans une pince d'écoute sans bille collectrice, même lorsque l'accéléromètre utilisé est à trois axes, l'amplitude du signal mesuré reste très fortement dépendante de l'orientation de la pince.

Avantageusement, l'accéléromètre 36 est disposé à l'aplomb de la bille 34. Ainsi, les vibrations collectées subissent des distorsions relativement limitées lors de leur transmission jusqu'à l'accéléromètre 36. Dans l'exemple illustré, la bille 34 est ainsi placée à l'aplomb de l'évidement 24 dans le fond duquel l'accéléromètre 36 est logé. Pour ne pas subir de perturbations vibratoires, l'accéléromètre 36 est en pratique espacé par rapport à l'arbre 21. Pour un accéléromètre à plusieurs axes, le circuit de sommation sera avantageusement placé à distance de l'accéléromètre 36, à l'intérieur de la branche de la pince d'écoute 10. Pour éviter les phénomènes de distorsion, le déphasage entre différents axes de l'accéléromètre 36 sera avantageusement nul. Des accéléromètres tels qu'intégrés dans des téléphones mobiles peuvent être utilisés.

La bille 34 est avantageusement réalisée en acier inoxydable pour optimiser sa longévité et sa qualité de transmission des vibrations. La bille 34 pourra présenter un diamètre inférieur ou égal à la moitié de la largeur de la partie plane 32. La partie plane 32 pourra présenter les dimensions suivantes : une longueur 25 mm, une largeur de 5 mm, et une épaisseur légèrement supérieure au diamètre de la bille 34. L'alésage de la partie plane 32 accueillant la bille 34 pourra présenter une profondeur légèrement inférieure au rayon de la bille 34. La bille 34 peut être fixée à la partie plane 32 par l'intermédiaire d'une colle rigide optimisant la transmission des vibrations. La colle utilisée est avantageusement résistante à des températures de peau généralement rencontrées au niveau des composants d'un moteur à combustion interne.

La partie plane 32 et la partie de fixation 33 sont avantageusement formées d'une platine monobloc réalisée en élastomère. Cet élastomère pourra présenter une dureté supérieure ou égale à 40 Shore (D) pour optimiser la transmission des vibrations vers l'accéléromètre. La bille 34 présente une dureté avantageusement au moins 5 fois supérieure à la dureté de la platine.

La figure 11 est une vue en perspective d'une variante de patin 40 pour une pince d'écoute 10 selon un troisième mode de réalisation de l'invention. À l'exception des patins 40, une pince selon le troisième mode de réalisation présente une structure similaire à celle du second mode de réalisation.

Le patin 40 comprend une partie plane 42 solidaire d'une partie de fixation non illustrée. La partie de fixation est destinée à être fixée à une mâchoire de la pince d'écoute 10 pour permettre de monter le patin 40 pivotant autour d'un axe parallèle à l'axe de pivotement entre les mâchoires. Une bille sphérique 44 est placée en contact avec la partie plane 42 du côté opposé à la partie de fixation. Une autre partie plane 45 présente une face en contact avec la bille 44 et une autre face destinée à venir en contact avec la structure à écouter. Les parties plane 42 et 45 sont sensiblement parallèles au repos et leur écartement est donc défini par le diamètre de la bille 44. Le volume délimité en pointillé entre les parties planes 42 et 45 comprend une garniture en matériau élastomère 47. La bille 44 est noyée dans la garniture élastomère 47. L'épaisseur de la garniture élastomère 47 est ainsi sensiblement égale au diamètre de la bille 44.

La partie plane 45 présente une surface importante facilitant le serrage de la structure à écouter. Du fait de sa forme sphérique, la bille 44 présente un contact sensiblement ponctuel avec la partie plane 45 et sert ainsi de collecteur pour recueillir une information vibratoire indépendante de l'orientation du patin 40 par rapport à cet élément. La partie plane 42 et la partie de fixation servent à transmettre l'information vibratoire collectée par la bille 44 jusqu'à un accéléromètre non illustré. La garniture élastomère 47 maintient la bille 44 en position entre les parties planes 42 et 45. La garniture 47 permet également de relier les parties planes 42 et 45 l'une à l'autre tout en permettant un certain pivotement entre celles-ci. La garniture atténue également les vibrations entre les plaques planes 42 et 45 pour que les vibrations transmises par la bille 44 restent prépondérantes. La garniture 47 peut être assemblée par collage aux parties planes 42 et 45.

Comme dans le mode de réalisation précédent, l'accéléromètre est avantageusement disposé à l'aplomb de la bille 44. L'accéléromètre pourra par exemple être disposé dans un évidement cylindrique réalisé dans la partie de fixation et placé à l'aplomb de la bille 44.

La bille 44 est avantageusement réalisée en acier inoxydable et présente avantageusement une dureté très supérieure à la dureté des parties planes 42 et 45. Les parties planes 42 et 45 sont avantageusement réalisées en matériau élastomère. Ce matériau élastomère présente une dureté supérieure ou égale à 40 Shore (D). Le matériau élastomère utilisé pour la garniture 47 présente une dureté nettement plus basse que la dureté des plaques planes 42 et 45. Cette dureté sera de préférence inférieure à 40 Shore (A).

Les dimensions illustrées sont destinées à faciliter la compréhension de la structure du patin 40, l'échelle de la bille 44 et l'épaisseur de la garniture 47 par rapport aux plaques planes 42 et 45 étant nettement plus réduites en réalité.

L'invention permet d'améliorer sensiblement la qualité de l'écoute en utilisant un organe collecteur récupérant les vibrations de l'élément à écouter par l'intermédiaire d'un contact ponctuel. L'invention permet en outre de faciliter le diagnostic vibroacoustique effectué lors d'une opération de maintenance ou d'assistance en après-vente automobile, ou de faciliter le travail d'experts qui peuvent bénéficier d'un outil de recherche et d'analyse rapide. Une telle pince permet par ailleurs d'obtenir une bonne réponse en fréquence, notamment entre 0 et 4000 Hertz, tout en limitant les risques de formation d'un court-circuit électrique.

## Revendications

1. Outil d'aide au diagnostic vibro-acoustique d'une structure à analyser, notamment d'aide au diagnostic lors d'une opération de maintenance ou d'assistance après-vente automobile, comprenant
- un casque (1) adapté aux environnements bruyants,
- un microphone (2) destiné à mesurer les bruits aériens,
- une pluralité de pinces d'écoute (10) destinées à mesurer les bruits solidiens de la structure à analyser,
- un boîtier de sélection (4) connecté au casque (1), au microphone (2) et à la pluralité de pinces d'écoute (10), permettant à un opérateur d'identifier immédiatement la pince d'écoute (10) la plus proche du phénomène vibro-acoustique à étudier,
lesdites pinces comprenant :
- un corps (10a) qui est formé par deux branches (11, 12) articulées autour d'un axe d'articulation (A), chaque branche (11, 12) comportant, à une extrémité, une mâchoire (13, 14) et, à l'autre extrémité, un manche (15, 16), et
- un accéléromètre (36) connecté au boitier de sélection,
**caractérisé en ce que** chaque pince d'écoute (10) comprend de plus un patin (20, 30, 40) monté sur chaque mâchoire (13, 14), chaque patin étant monté pivotant par rapport à sa mâchoire de telle sorte que le patin (20, 30, 40) assure un contact efficace entre la pince d'écoute (10) et la structure à analyser et découple le corps (10a) de la partie d'écoute, et
**en ce que** le patin comprend
- une bille (34, 44) formant un organe collecteur de bruits solidiens provenant de la structure à analyser, et
- une platine (32, 42) qui est montée pivotante par rapport à la mâchoire correspondante et qui est adaptée à transmettre l'information vibratoire collectée par la bille jusqu'à l'accéléromètre (36), et ladite bille (34, 44) étant en contact avec et en saillie par rapport à la platine (32, 42).

2. Outil d'aide au diagnostic vibro-acoustique selon la revendication 1, **caractérisé en ce que** le corps de chaque pince d'écoute est réalisé en matière plastique rigide, de telle sorte que son utilisation ne peut pas occasionner de court-circuit électrique.

3. Outil d'aide au diagnostic vibro-acoustique selon l'une quelconque des revendications 1 et 2, **caractérisé en ce que** les patins (20, 30, 40) sont réalisés en matière plastique dure.

4. Outil d'aide au diagnostic vibro-acoustique selon l'une quelconque des revendications 1 à 3, **caractérisé en ce que** les branches (11, 12) sont formées de nervures ajourées de façon à rendre la pince (10) plus légère, sauf dans leur partie médiane à la hauteur de l'axe d'articulation (A) où elles sont au contraire renforcées.

5. Outil d'aide au diagnostic vibro-acoustique selon l'une des revendications 1 à 4, **caractérisé en ce que** la partie de la bille (34) en saillie est à l'air libre et est destinée à venir en contact avec la structure à écouter.

6. Outil d'aide au diagnostic vibro-acoustique selon l'une des revendications 1 à 4, **caractérisé en ce que** le patin (40) comprend une plaque (45) dont une face est en contact avec la bille (44) et dont l'autre face est destinée à venir en contact avec la structure à écouter.

7. Outil d'aide au diagnostic vibro-acoustique selon la revendication 6, **caractérisé en ce que** la bille (44) présente un contact ponctuel avec la platine (42) et avec la plaque (45).

8. Outil d'aide au diagnostic vibro-acoustique selon la revendication 7, **caractérisé en ce que** la bille (44) est en contact avec une face sensiblement plane de la platine (42), la plaque (45) étant sensiblement plane et parallèle à ladite face plane de la platine (42).

9. Outil d'aide au diagnostic vibro-acoustique selon une des revendications 6 à 8, **caractérisé en ce que** le patin (40) comprend une garniture (47) reliant la platine (42) et la plaque (45) et logeant la bille (44).

10. Outil d'aide au diagnostic vibro-acoustique selon l'une des revendications 5 à 9, **caractérisé en ce que** la bille (34, 44) présente une dureté au moins 5 fois supérieure à la dureté de la platine (32, 42).

11. Outil d'aide au diagnostic vibro-acoustique selon l'une des revendications 5 à 10, **caractérisé en ce que** l'accéléromètre (36) est fixé sur le patin (30).

12. Outil d'aide au diagnostic vibro-acoustique selon la revendication 11, **caractérisée en ce que** l'accéléromètre (26) est fixé sur la platine (32, 42) à l'aplomb de la bille (34, 44).

13. Outil d'aide au diagnostic vibro-acoustique selon l'une quelconque des revendications précédentes, **caractérisé en ce que** les pinces d'écoute (10) sont de même taille.

## Patentansprüche

1. Hilfsinstrument zur vibroakustischen Diagnose einer zu analysierenden Struktur, insbesondere der Hilfe zur Diagnose bei einem Automobilwartungs- oder Automobilkundendienstbetrieb, umfassend
- einen Kopfhörer (1), der an Geräuschumgebungen angepasst ist,
- ein Mikrophon (2), das dazu bestimmt ist, den Luftschall zu messen,
- eine Vielzahl von Abhorchklemmen (10), die dazu bestimmt sind, den Körperschall der zu analysierenden Struktur zu messen,
- einen Auswahlkasten (4), der mit dem Kopfhörer (1), mit dem Mikrophon (2) und mit der Vielzahl von Abhorchklemmen (10) verbunden ist, der es einem Betreiber ermöglicht, unmittelbar die Abhorchklemme (10) zu identifizieren, die dem zu untersuchenden vibroakustischen Phänomen am nächsten ist,
wobei die Klemmen umfassen:
- einen Körper (10a), der durch zwei Arme (11, 12) gebildet ist, die sich um eine Gelenkachse (A) drehen, wobei jeder Arm (11, 12) an einem Ende eine Backe (13, 14) und am anderen Ende einen Griff (15, 16) enthält, und
- einen Beschleunigungsmesser (36), der mit dem Auswahlkasten verbunden ist,
**dadurch gekennzeichnet, dass** jede Abhorchklemme (10) weiter einen Belag (20, 30, 40) umfasst, der auf jeder Backe (13, 14) montiert ist, wobei jeder Belag schwenkbar in Bezug auf seine Backe montiert ist, sodass der Belag (20, 30, 40) einen wirksamen Kontakt zwischen der Abhorchklemme (10) und der zu analysierenden Struktur gewährleistet und den Körper (10a) vom Abhorchteil entkoppelt, und
dadurch, dass der Belag umfasst
- eine Kugel (34, 44), die ein Sammelorgan von Körperschall bildet, der aus der zu analysierenden Struktur stammt, und
- eine Scheibe (32, 42), die schwenkbar in Bezug auf die entsprechende Backe montiert ist und die angepasst ist, um die von der Kugel gesammelten Vibrationsinformationen bis zum Beschleunigungsmesser (36) zu übertragen, und wobei die Kugel (34, 44) mit der Scheibe (32, 42) in Kontakt und in Bezug auf diese vorspringend ist.

2. Hilfsinstrument zur vibroakustischen Diagnose nach Anspruch 1, **dadurch gekennzeichnet, dass** der Körper von jeder Abhorchklemme aus steifem Kunststoff hergestellt ist, sodass ihre Verwendung keinen elektrischen Kurzschluss verursachen kann.

3. Hilfsinstrument zur vibroakustischen Diagnose nach einem der Ansprüche 1 und 2, **dadurch gekennzeichnet, dass** die Beläge (20, 30, 40) aus Hartkunststoff hergestellt sind.

4. Hilfsinstrument zur vibroakustischen Diagnose nach einem der Ansprüche 1 bis 3, **dadurch gekennzeichnet, dass** die Arme (11, 12) aus Rippen gebildet sind, die durchbrochen sind, damit die Klemme (10) leichter wird, außer in ihrem medianen Teil in Höhe der Gelenkachse (A), wo sie hingegen verstärkt sind.

5. Hilfsinstrument zur vibroakustischen Diagnose nach einem der Ansprüche 1 bis 4, **dadurch gekennzeichnet, dass** der vorspringende Teil der Kugel (34) im Freien ist und dazu bestimmt ist, in Kontakt mit der abzuhorchenden Struktur zu kommen.

6. Hilfsinstrument zur vibroakustischen Diagnose nach einem der Ansprüche 1 bis 4, **dadurch gekennzeichnet, dass** der Belag (40) eine Platte (45) umfasst, von der eine Fläche in Kontakt mit der Kugel (44) ist und von der die andere Fläche dazu bestimmt ist, in Kontakt mit der abzuhorchenden Struktur zu kommen.

7. Hilfsinstrument zur vibroakustischen Diagnose nach Anspruch 6, **dadurch gekennzeichnet, dass** die Kugel (44) einen Punktkontakt mit der Scheibe (42) und mit der Platte (45) aufweist.

8. Hilfsinstrument zur vibroakustischen Diagnose nach Anspruch 7, **dadurch gekennzeichnet, dass** die Kugel (44) in Kontakt mit einer im Wesentlichen ebenen Fläche der Scheibe (42) ist, wobei die Platte (45) im Wesentlichen eben und parallel zur ebenen Fläche der Scheibe (42) ist.

9. Hilfsinstrument zur vibroakustischen Diagnose nach einem der Ansprüche 6 bis 8, **dadurch gekennzeichnet, dass** der Belag (40) eine Verkleidung (47) umfasst, die die Scheibe (42) und die Platte (45) verbindet und die Kugel (44) aufnimmt.

10. Hilfsinstrument zur vibroakustischen Diagnose nach einem der Ansprüche 5 bis 9, **dadurch gekennzeichnet, dass** die Kugel (34, 44) eine Härte aufweist, die mindestens 5 Mal höher ist als die Härte der Scheibe (32, 42).

11. Hilfsinstrument zur vibroakustischen Diagnose nach einem der Ansprüche 5 bis 10, **dadurch gekennzeichnet, dass** der Beschleunigungsmesser (36) auf dem Belag (30) befestigt ist.

12. Hilfsinstrument zur vibroakustischen Diagnose nach Anspruch 11, **dadurch gekennzeichnet, dass** der Beschleunigungsmesser (26) auf der Scheibe (32, 42) im Lot der Kugel (34, 44) befestigt ist.

13. Hilfsinstrument zur vibroakustischen Diagnose nach einem der vorstehenden Ansprüche, **dadurch gekennzeichnet, dass** die Abhorchklemmen (10) gleich groß sind.

## Claims

1. Vibroacoustic diagnosis tool for a structure to be analysed, in particular by means of diagnosis during a maintenance operation or after-sales assistance operation, comprising
- a headset (1) adapted to noisy environments,
- a microphone (2) designed for measuring airborne sounds,
- a plurality of listening clamps (10) designed to measure solid-borne sounds of the structure to be analysed,
- a selection box (4) connected to the headset (1), to the microphone (2) and to the plurality of listening clamps (10), enabling an operator to identify immediately the closest listening clamp (10) to the vibroacoustic phenomenon to be studied,
said clamps comprising:
- a body (10a) which is formed by two branches (11, 12) that are articulated around an articulation axis (A), each branch (11, 12) comprising at one end a jaw (13, 14) and at the other end a handle (15, 16) and
- an accelerometer (36) connected to the selection box,
**characterised in that** each listening clamp (10) also comprises a pad (20, 30, 40) mounted on each jaw (13, 14), each pad being mounted in a pivoting manner relative to its jaw such that the pad (20, 30, 40) ensures effective contact between the listening clamp (10) and the structure to be analysed and uncouples the body (10a) of the listening clamp and
**in that** the pad comprises:
- a ball (34, 44) forming a collecting element for solid-borne sounds coming from the structure to be analysed and
- a board (32, 42) which is mounted pivotably relative to the corresponding jaw and which is adapted to transmit the vibratory information collected by the ball to the accelerometer (36) and said ball (34, 44) being in contact with and projecting relative to the board (32, 42).

2. Vibroacoustic diagnosis tool according to claim 1, **characterised in that** the body of each listening clamp is made from rigid plastic material such that it cannot cause an electric short-circuit when in use.

3. Vibroacoustic diagnosis tool according to any one of claims 1 and 2, **characterised in that** the pads (20, 30, 40) are made from a hard plastic material.

4. Vibroacoustic diagnosis tool according to any one of claims 1 to 3, **characterised in that** the branches (11, 12) are formed by perforated ribs so as to make the clamp (10) lighter, apart from in their middle part at the level of the axis of articulation (A) where they are reinforced instead.

5. Vibroacoustic diagnosis tool according to any one of claims 1 to 4, **characterised in that** the projecting part of the ball (34) is open to the air and is designed to come into contact with the structure to be listened to.

6. Vibroacoustic diagnosis tool according to any one of claims 1 to 4, **characterised in that** the pad (40) comprises a plate (45), one face of which is in contact with the ball (44) and the other face of which is designed to be in contact with the structure to be listened to.

7. Vibroacoustic diagnosis tool according to claim 6, **characterised in that** the ball (44) is in punctual contact with the board (42) and with the plate (45).

8. Vibroacoustic diagnosis tool according to claim 7, **characterised in that** the ball (44) is in contact with a substantially planar face of the board (42), the plate (45) being substantially planar and parallel to said planar face of the board (42).

9. Vibroacoustic diagnosis tool according to any of claims 6 to 8, **characterised in** the pad (40) comprises a filling (47) connecting the board (42) and the plate (45) and accommodating the ball (44).

10. Vibroacoustic diagnosis tool according to any of claims 5 to 9, **characterised in that** the ball (34, 44) has a hardness which is a least 5 times greater than the hardness of the board (32, 42).

11. Vibroacoustic diagnosis tool according to any one of claims 5 to 10, **characterised in that** the accelerometer (36) is fixed onto the pad (30).

12. Vibroacoustic diagnosis tool according to claim 11, **characterised in that** the accelerometer (26) is fixed onto the board (32, 42) in the centreline of the ball (34, 44).

13. Vibroacoustic diagnosis tool according to any one of the preceding claims, **characterised in that** the listening clamps (10) are the same size.
